# EUROPÄISCHE PATENTSCHRIFT

(11) **EP 1 250 544 B1**
(45) Veröffentlichungstag und Bekanntmachung des Hinweises auf die Patenterteilung: **11.06.2003**
(21) Anmeldenummer: 01909676.7
(22) Anmeldetag: 23.01.2001
(51) Int. Cl.: F16H 41/24, F16H 45/02

(54) **MITNEHMERSCHEIBE ZUR MOMENT-ÜBERTRAGUNG VON EINER ANTRIEBSEINHEIT AUF EINEN HYDRODYNAMISCHEN WANDLER**
DRIVING DISC FOR TRANSMITTING THE TORQUE FROM A DRIVE UNIT TO A HYDRODYNAMIC CONVERTER
PLATEAU D'ENTRAINEMENT POUR LE TRANSFERT DE COUPLE D'UNE UNITE D'ENTRAINEMENT A UN CONVERTISSEUR HYDRODYNAMIQUE

(30) Priorität: 29.01.2000 DE 10003925
(43) Veröffentlichungstag der Anmeldung: 23.10.2002
(73) Patentinhaber: ZF FRIEDRICHSHAFEN Aktiengesellschaft, 88038 Friedrichshafen (DE)
(72) Erfinder: DREES, Silvius, 88069 Tettnang (DE); ZIEMER, Peter, 88069 Tettnang (DE)
(86) Internationale Anmeldenummer: EP0100687
(87) Internationale Veröffentlichungsnummer: WO01055621

(56) Entgegenhaltungen:
- EP-A- 0 749 861
- US-A- 5 616 002

## Beschreibung

Die vorliegende Erfindung betrifft eine Mitnehmerscheibe zur Moment-Übertragung von einer Antriebseinheit auf einen hydrodynamischen Wandler nach dem Oberbegriff des Patentanspruches 1.

Derartige Mitnehmerscheiben zur Moment-Übertragung von einer Antriebseinheit auf einen hydrodynamischen Wandler sind bekannt. Beispielsweise geht aus der EP 0 719 393 B1 eine Mitnehmerscheibe hervor, die zwischen einer Antriebseinheit und einem hydrodynamischen Wandler angeordnet und an dem Wandlergehäuse durch mehrere Verbindungselemente in radialer Richtung fixiert ist. Die Mitnehmerscheibe besteht aus zwei einen rechten Winkel einschließenden Schenkeln, wobei ein Schenkel in radialer Richtung verläuft und radial innen an der Ausgangswelle der Antriebseinheit verschraubt ist. Der andere Schenkel weist in der Umfangsrichtung verlaufende Aussparungen im Bereich von in der Umfangsrichtung gegeneinander versetzten Bohrungen auf, durch die Schrauben geführt sind, die in Aufnahmeeinrichtungen verschraubt sind, die am Wandlergehäuse befestigt sind. Die Aussparungen bilden durchgehende Laschen, in denen die Bohrungen angeordnet sind und die bewirken, dass die Mitnehmerscheibe in radialer Richtung biegeweich ist. Dadurch wird eine erhöhte Belastung der Lager des hydrodynamischen Wandlers bei einem außermittigen Einbau vermieden.

Problematisch ist es hierbei, dass beim Verschrauben der sehr steifen Laschen vorhandene Koaxialitätstoleranzen sowie Radialtoleranzen in der Mitnehmerscheibe und in den Aufnahmeeinrichtungen am Wandlergehäuse überwunden werden müssen. Dabei kann die Mitnehmerscheibe im Bereich der Laschen verspannt werden. Bezogen auf die Laschen können tangentiale Kräfte entstehen, die sich ungünstig auf die Dauerhaltbarkeit auswirken.

Eine gattungsgemäße Mitnehmerscheibe der eingangs genannten Art zur Moment-Übertragung von einer Antriebseinheit auf einen hydrodynamischen Wandler geht aus der DE 195 22 869 A1 bzw. EP0 749 861 hervor. Hierbei weist der mit den Aufnahmeeinrichtungen des hydrodynamischen Wandlers verbundene, axial verlaufende Schenkel der die Verbindung zwischen dem hydrodynamischen Wandler und der Antriebseinrichtung herstellenden Mitnehmerscheibe in der Umfangsrichtung voneinander beabstandete Bohrungen auf, durch die in den Aufnahmeeinrichtungen verschraubte Bolzen geführt sind. Im Bereich der Bohrungen besitzt der axial verlaufende Schenkel der Mitnehmerscheibe Ausnehmungen, die über einen Teilumfang als Schlitz ausgeführt sind, der sich in der Umfangsrichtung gesehen zu beiden Seiten der Bohrung erstreckt und so geformt ist, dass er eine Lasche bildet, die eine Bohrung zur Befestigung an einer Aufnahmeeinrichtung in ihrem freien Endbereich aufweist. Auch hierdurch wird eine radiale Elastizität des axialen Schenkels der Mitnehmerscheibe erreicht, durch die eine Desachsierung zwischen dem hydrodynamischen Wandler und der Welle der Antriebseinheit vermieden wird, wenn sich die mit dem axialen Schenkel verbundenen Auflageeinrichtungen außerhalb der festgelegten Konstruktionslage befinden.

Problematisch ist es hierbei, dass je nach Lastrichtung die genannten Laschen auf Zug oder Druck und damit auf Knickung beansprucht werden. Dies wirkt sich ungünstig auf die Lebensdauer der gesamten Mitnehmerscheibe zur Moment-Übertragung aus.

Die Aufgabe der vorliegenden Erfindung besteht daher darin, eine Mitnehmerscheibe zur Moment-Übertragung von einer Antriebseinheit auf einen hydrodynamischen Wandler zu schaffen, durch die eine deutliche Steigerung der Lebensdauer erreicht wird, wobei gleichzeitig Koaxialitäts- und Radialtoleranzen überwindbar sind.

Diese Aufgabe wird durch eine Mitnehmerscheibe zur Moment-Übertragung mit den Merkmalen des Patentanspruches 1 gelöst.

Der wesentliche Vorteil der vorliegenden Erfindung besteht darin, dass auftretende Druckkräfte deutlich reduziert werden, weil die zungenförmig ausgeformten Laschen gegenläufig ausgebildet sind. Dadurch wird die Dauerhaltbarkeit bzw. die Lebensdauer der erfindungsgemäßen Mitnehmerscheibe wesentlich gesteigert.

Da bei der vorliegenden Erfindung die gegenläufig ausgebildeten Laschen gleichzeitig auch elastisch sind, können zwischen der Antriebseinheit und dem hydrodynamischen Wandler vorhandene Koaxialitätstoleranzen sowie Radialtoleranzen zwischen der Mitnehmerscheibe und den Aufnahmeeinrichtungen am Wandlergehäuse überwunden werden.

Weitere vorteilhafte Ausgestaltungen gehen aus den Unteransprüchen hervor.

Im folgenden werden die Erfindung und deren Ausgestaltungen im Zusammenhang mit den Figuren näher erläutert.

Es zeigen:
- Fig. 1: einen Schnitt durch eine Mitnehmerscheibe, die an einem hydrodynamischen Wandler befestigt ist;
- Fig. 2, 3: eine erste Ausführungsform der erfindungsgemäßen Mitnehmerscheibe;
- Fig. 4, 5: eine zweite Ausführungsform der erfindungsgemäßen Mitnehmerscheibe und
- Fig. 6, 7: eine dritte Ausführungsform der erfindungsgemäßen Mitnehmerscheibe.

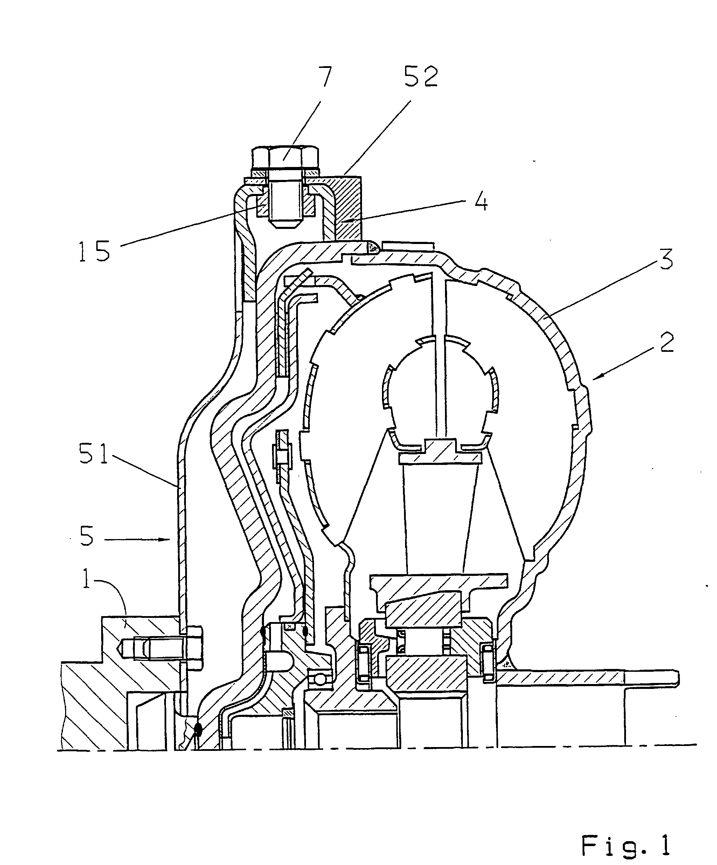

Die Fig. 1 zeigt einen Schnitt durch eine Anordnung zur zur Moment-Übertragung von einer Antriebseinheit auf ein Getriebe mit einem hydrodynamischen Wandler. Dabei ist mit 1 die Zapfenwelle einer nicht dargestellten Antriebseinheit bezeichnet. Beispielsweise handelt es sich hierbei um die Kurbelwelle einer Brennkraftmaschine. Mit 2 ist der hydrodynamische Wandler bezeichnet, der in an sich bekannter Weise in einem Wandlergehäuse 3 ein Pumpenrad, ein Turbinenrad und ein Laufrad aufweist, die nicht näher bezeichnet sind. Mit dem Gehäuse 3 des hydrodynamischen Wandlers 2 sind mehrere Aufnahmeeinrichtungen 4 verbunden.

Zur Verbindung des hydrodynamischen Wandlers 2 mit der Ausgangswelle 1 der Antriebseinheit ist eine Mitnehmerscheibe 5 vorgesehen, die einen ersten in radialer Richtung verlaufenden Schenkel 51 in der Form eines Scheibenteiles und einen zweiten, in axialer Richtung verlaufenden Schenkel 52 in der Form eines Flansches besitzt. Die Schenkel 51 und 52 schließen einen rechten Winkel ein. Der Schenkel 51 ist an seinem freien Ende mit der Ausgangswelle 1 der Antriebseinheit drehfest verbunden und axial fixiert. Vorzugsweise weist der Schenkel 51 an seinem radial innenliegenden Ende Bohrungen 6 zur Verschraubung an der Ausgangswelle 1 auf.

Der Schenkel 52 kann auch mit der Hilfe anderer Befestigungselemente an den Aufnehmereinrichtungen 4 befestigt werden. Vorzugsweise eignen sich hierfür auch Nieten, Bolzen oder Stifte.

Die Moment-Übertragung erfolgt somit von einer nicht dargestellten Antriebseinheit auf deren Ausgangswelle 1, über die Schenkel 51, 52 der Mitnehmerscheibe 5 und die Aufnahmeeinrichtungen 7 auf das Gehäuse 3 des hydrodynamischen Wandlers 2.

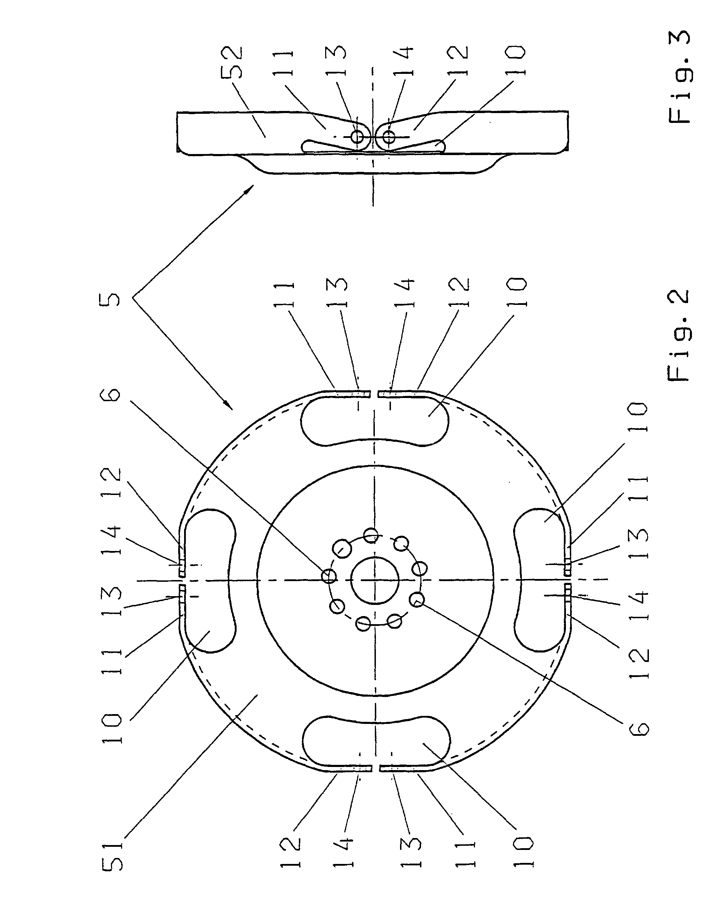

Die vorliegende Mitnehmerscheibe 5 zur Moment-Übertragung weist gemäß den Fig. 2 und 3 im radial verlaufenden Schenkel 51 des Mitnehmers 5 an der dem axialen Schenkel 52 zugewandten Seite Aussparungen 10 auf, die gleichmäßig über den Umfang der Mitnehmerscheibe 5 verteilt sind. Die Ausnehmungen erstrecken sich in axialer Richtung eine vorgegebene Strecke in den axialen Schenkel hinein, d.h. sie verlaufen über den zwischen den Schenkeln 51, 52 gebildeten rechten Winkel hinweg. Beispielsweise weist die Mitnehmerscheibe 5 gemäß Fig. 2 vier Aussparungen 10 auf.

In der aus den Fig. 2 und 3 ersichtlichen Weise sind im axialen Schenkel 52 der Mitnehmerscheibe 5 im Bereich jeder Aussparung 10 zwei zungenförmige Laschen 11, 12 ausgebildet, die ausgehend von den Seiten der Aussparung 10 aufeinander zu verlaufen.

Die freien Enden der aufeinander zu verlaufenden Laschen 11 und 12 sind voneinander beabstandet. In dem Endbereich jeder Lasche 11, 12 befindet sich eine Öffnung 13, 14, durch die zur Befestigung des axialen Schenkels 52 der Mitnehmerscheibe 5 an den Aufnahmeeinrichtungen 4 des Gehäuses 3 des hydrodynamischen Wandlers 2 Befestigungseinrichtungen hindurchführbar sind. Vorzugsweise handelt es sich gemäß Fig. 1 bei diesen Befestigungseinrichtungen um Schrauben 7, die in den Aufnahmeinrichtungen 4 verschraubt werden. Dies bedeutet, dass im Falle der Ausführungsform der Fig. 2 und 3 jede Aufnahmeeinrichtung 4 zwei deckungsgleich zu den Öffnungen 13, 14 angeordnete Öffnungen 15 aufweist.

Durch die beschriebene Laschenanordnung im Bereich der Aussparungen 10 wird erreicht, dass die Mitnehmerscheibe 5 in radialer Richtung biegeweich ist, sodass einer erhöhten Belastung der Lager des Wandlers 2 durch einen außermittigen Einbau vorgebeugt wird.

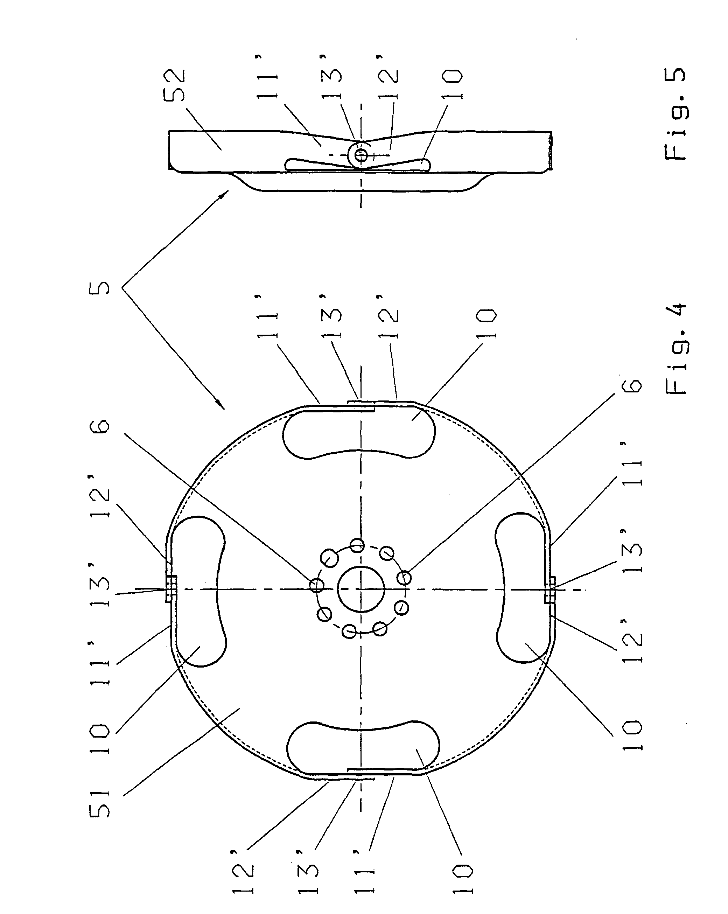

In den Fig. 4 und 5 ist eine weiter Ausführungsform dargestellt, die im wesentlichen der Ausführungsform der Fig. 2 und 3 entspricht. Bei der Ausführungsform der Fig. 4 und 5 überlappen sich jedoch die Endbereiche der aufeinander zu verlaufenden Laschen 11' und 12', wobei im Überlappungsbereich der Laschen 11' und 12' eine einzige gemeinsame Öffnung 13' vorgesehen ist, die zur Befestigung des axialen Schenkels 52 der Mitnehmerscheibe 5 an den Aufnahmeeinrichtungen 4 dient. Diese Ausführungsform hat erkennbar den Vorteil, dass nur die Hälfte an Schrauben 7 erforderlich ist, was zu einer Kostenreduzierung führt. Gleichzeitig verringert sich auch der entsprechende Montageaufwand.

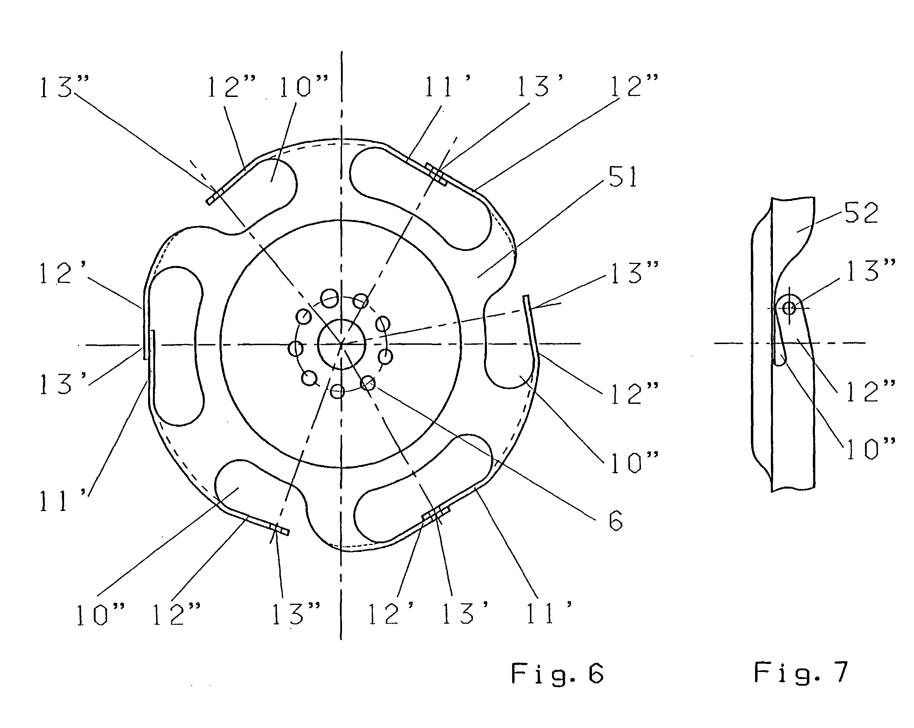

Schließlich zeigen die Fig. 6 und 7 eine Ausführungsform, bei der neben Laschenanordnungen gemäß der Ausführungsform der Fig. 4 und 5 auch Laschenanordnungen vorgesehen sind, bei denen nur eine einzige Lasche 12'' mit einer Öffnung 13'' zur Befestigung in einer Richtung verläuft. Dabei sind zwischen jeweils zwei Laschenanordnungen mit gegenläufig verlaufenden Laschen 11', 12' eine Anordnung mit einer nur in einer Richtung verlaufenden Lasche 12'' vorgesehen. Diese Ausführungsform hat den Vorteil, dass den unterschiedlichen Belastungsniveaus im Zug- und Schubbetrieb der Verbrennungsmaschine Rechnung getragen werden kann, da die Anzahl der Laschen 12' in der einen Richtung ungleich der Anzahl der Laschen 12'' in der anderen Richtung ist.

Es wird darauf hingewiesen, dass bei der Ausführungsform der Fig. 6 und 7 anstelle der Laschenanordnungen mit den Laschen 11' und 12' auch Laschenanordnungen mit den Laschen 11 und 12 gemäß den Fig. 2 und 3 vorgesehen sein können.

### Bezugszeichen

- 1: Ausgangswelle einer Antriebseinheit
- 2: Wandler
- 3: Gehäuse
- 4: Aufnahmeeinrichtung
- 5: Mitnehmerscheibe
- 6: Bohrung
- 7: Schraube
- 10: Aussparung
- 11: Lasche
- 12: Lasche
- 13: Öffnung
- 14: Öffnung

- 51: Schenkel
- 52: Schenkel

- 11': Lasche
- 12': Lasche
- 13': Öffnung
- 10'': Aussparung
- 12'': Lasche
- 13'': Öffnung

## Patentansprüche

1. Mitnehmerscheibe zur Momentübertragung von einer Antriebseinheit auf einen hydrodynamischen Wandler (2), wobei die Mitnehmerscheibe (5) einen in radialer Richtung verlaufenden Schenkel (51), der an der Ausgangswelle (1) der Antriebseinheit befestigt ist, und einen in axialer Richtung verlaufenden Schenkel (52) aufweist, der an Aufnahmeeinrichtungen (4) eines Gehäuses (3) des hydrodynamischen Wandlers (2) befestigt ist, wobei durch in Umfangsrichtung der Mitnehmerscheibe (5) voneinander beabstandete Aussparungen (10) Laschenanordnungen im in der axialen Richtung verlaufenden Schenkel (52) ausgebildet sind, die zur Befestigung des in axialer Richtung verlaufenden Schenkels (52) an Aufnahmeeinrichtungen (4) dienen, die am Gehäuse (3) angeordnet sind, **dadurch gekennzeichnet, dass** die Laschenanordnungen jeweils durch zungenförmig ausgebildete Laschen (11, 12; 11', 12') gebildet sind, die in Umfangsrichtung gesehen von den beiden Seiten der Aussparung (10) aufeinander zu verlaufen und dass die Endbereiche der Laschen (11, 12; 11', 12') jeweils an einer Aufnahmeeinrichtung (4) befestigt sind.

2. Mitnehmerscheibe nach Anspruch 1, **dadurch gekennzeichnet, dass** sich die Aussparungen (10) jeweils ausgehend von dem radial äußeren Ende des in radialer Richtung verlaufenden Schenkels (51) in den in axialer Richtung verlaufenden Schenkel (52) hineinerstrecken.

3. Einrichtung nach Anspruch 1 oder 2, **dadurch gekennzeichnet, dass** die Enden der aufeinander zu verlaufenden Laschen (11, 12) voneinander beabstandet sind, dass in jedem Endbereich jeder Lasche (11, 12) eine Öffnung (13, 14) zur Aufnahme eines Befestigungselementes (7) zur Befestigung der Lasche (11, 12) an einer Aufnahmeeinrichtung (4) angeordnet ist.

4. Einrichtung nach Anspruch 1 oder 2, **dadurch gekennzeichnet, dass** sich die Endbereiche der aufeinander zu verlaufenden Laschen (11', 12') überlappen, dass im Überlappungsbereich eine gemeinsame Öffnung (13') zum Hindurchführen eines Befestigungselementes (7) zur Befestigung der Laschen (11', 12') an einer Aufnahmeeinrichtung (4) vorgesehen ist.

5. Einrichtung nach Anspruch 3 oder 4, **dadurch gekennzeichnet, dass** zwischen zwei Aussparungen (10) jeweils eine weitere Aussparung (10'') vorgesehen ist und dass sich von einer Seite der weiteren Aussparung (10'') eine einzige Lasche (12'') in einer Richtung erstreckt und die weitere Aussparung (10'') wenigstens teilweise in Umfangsrichtung des in axialer Richtung verlaufenden Schenkels (52) überdeckt, wobei im Endbereich der weiteren Lasche (12'') eine Öffnung (13") vorgesehen ist, durch die ein Befestigungselement (7) zur Befestigung der weiteren Lasche (12'') an einer Aufnahmeeinrichtung (4) hindurchführbar ist.

6. Einrichtung nach Ansprüchen 1 bis 5, **dadurch gekennzeichnet, dass** die Aussparungen (10) regelmäßig über den Umfang der Mitnehmerscheibe (5) verteilt sind.

## Claims

1. Drive disk for torque transmission from a drive unit to a hydrodynamic converter (2), with the drive disk (5) featuring a radial leg (51) fixed to the output shaft (1) of the drive unit and an axial leg (52) fixed to mounting fixtures (4) of a housing (3) of the hydrodynamic converter (2), with recesses (10) interspaced in circumferential direction of the drive disk (5) forming tabs on the axial leg (52) and the tabs allowing mounting of the axial leg (52) to mounting fixtures (4) arranged on the housing (3), **characterized in that** the tabs are tongue-shaped tabs (11, 12, 11', 12') which from both ends of the recess (10) run up to each other - seen in circumferential direction -, and that the ends of the tabs (11, 12, 11', 12') are each mounted to a mounting fixture (4).

2. Drive disk according to claim 1, **characterized in that** the recesses (10) originating from the radial end of the radial leg (51) extend to the axial leg (52).

3. Arrangement according to claim 1 or 2, **characterized in that** there are spaces between the ends of the converging tabs (11, 12), that each end of each tab (11, 12) has an opening (13, 14) to receive a mounting element (7) for mounting the tab (11, 12) to a mounting fixture (4).

4. Arrangement according to claim 1 or 2, **characterized in that** the ends of the converging tabs (11', 12') overlap and that the overlapping area features a joint opening (13') for inserting a mounting element (7) for mounting the tabs (11', 12') to a mounting fixture (4).

5. Arrangement according to claim 3 or 4, **characterized in that** between each pair of recesses (10) there is a further recess (10"), and that from one side of the further recess (10") there is a single tab (12") extending in one direction and overlapping the further recess (10") at least partially in circumferential direction of the axial leg (52), with the end area of the further tab (12") featuring an opening (13") for inserting a mounting element (7) for mounting the further tab (12") to a mounting fixture (4).

6. Arrangement according to claims 1 through 5, **characterized in that** the recesses (10) are evenly spread along the circumference of the drive disk (5).

## Revendications

1. Disque entraîneur pour la transmission d'un couple généré par une unité de propulsion vers un convertisseur hydrodynamique (2), sachant que le disque entraîneur (5) est doté d'une fusée (51) placée en sens radial et fixée sur l'arbre de sortie (1) de l'unité de propulsion et d'une fusée (52) placée en sens axial et fixée sur des équipements de positionnement (4) d'un carter (3) du convertisseur hydrodynamique (2), sachant que dans la fusée (52) placée en sens axial sont réalisées - au moyen d'évidements espacés sur le pourtour du disque entraîneur (5) - des ensembles de languettes servant à la fixation de la fusée (52) placée en sens axial sur les équipements de positionnement (4) qui sont disposés sur le carter (3), **caractérisé en ce que** les ensembles de languettes sont réalisés au moyen d'attaches en forme de langue (11, 12, 11', 12') disposées de façon convergente sur le pourtour et des deux côtés de l'évidement (10), et **en ce que** les extrémités des languettes (11, 12, 11', 12') sont fixées sur les équipements de positionnement (4).

2. Disque entraîneur selon la revendication 1, **caractérisé en ce que** les évidements (10) s'étendent respectivement à partir de l'extrémité radiale de la fusée (51) placée en sens radial jusqu'à la fusée (52) placée en sens axial.

3. Equipement selon une des revendications 1 ou 2, **caractérisé en ce que** les extrémités des languettes (11, 12) disposées de façon convergente sont espacées, et **en ce que** dans chaque extrémité de chacune des languettes (11, 12) est prévu un orifice (13, 14) pour le positionnement d'un élément de fixation (7) permettant la fixation de la languette (11, 12) sur un équipement de positionnement (4).

4. Equipement selon une des revendications 1 ou 2, **caractérisé en ce que** les extrémités des languettes (11', 12') disposées de façon convergente se chevauchent, et **en ce que** dans la zone de chevauchement est prévu un orifice commun (13') pour y faire passer un élément de fixation (7) permettant la fixation des languettes (11', 12') sur un équipement de positionnement (4).

5. Equipement selon une des revendications 3 ou 4, **caractérisé en ce que** entre deux évidements (10) est prévu respectivement un autre évidement (10") et **en ce que** à partir d'un côté de cet autre évidement (10") s'étend une seule languette (12") dans un sens et **en ce que** celle-ci recouvre au moins partiellement cet autre évidement (10") dans le pourtour de la fusée (52) placée en sens axial, sachant que dans l'extrémité de cette autre languette (12") est prévu un orifice (13") dans lequel on peut faire passer un élément de fixation (7) permettant la fixation de l'autre languette (12") sur un équipement de positionnement (4).

6. Equipement selon les revendications 1 à 5, **caractérisé en ce que** les évidements (10) sont régulièrement espacés sur le pourtour du disque entraîneur (5).
